Europäisches Patentamt

European Patent Office

Office européen des brevets

(11) Publication number: **0 487 147 A1**

## EUROPEAN PATENT APPLICATION

(21) Application number: **91202973.3**

(22) Date of filing: **14.11.91**

(51) Int. Cl.5: **B65D 19/42**, B62B 3/00

(30) Priority: **19.11.90 NL 9002523**

(43) Date of publication of application:
**27.05.92 Bulletin 92/22**

(84) Designated Contracting States:
**AT BE CH DE DK ES FR GB GR IT LI LU NL SE**

(71) Applicant: **CURTEC NEDERLAND B.V.**
**Spoorlaan Noord 92**
**NL-5121 WX Rijen(NL)**

(72) Inventor: **Beljaars, Johannes Martinus**
**Wilhelmus**
**Hofstad 47**
**NL-5126 EW Gilze(NL)**

(74) Representative: **Hoorweg, Petrus Nicolaas et**
**al**
**OCTROOIBUREAU ARNOLD & SIEDSMA**
**Sweelinckplein 1**
**NL-2517 GK The Hague(NL)**

(54) **Plastic pallet.**

(57) A plastic pallet (1) comprising a quadrangular load receiving surface (2) having arranged thereunder reinforcing means including metal profiles, wherein close to the corner of the load receiving surface the pallet has a recess (7) for coupling on one or more support elements, such as a bar rail (5), standing on the load surface and wherein the recess is provided with a metal coupling member for receiving a pin-like coupling (6) of the support element, so obtaining a sufficient robustness with respect to the forces acting on the standing bar rails and avoiding a possible splitting of the plastic material.

FIG.1

The invention relates to a plastic pallet comprising a quadrangular load receiving surface having arranged thereunder reinforcing means including metal profiles, wherein close to the corner of the load receiving surface the pallet has a recess for coupling on one or more support elements, such as a bar rail, standing on the load surface.

Such a pallet of the type described in the preamble is used for transporting packaged articles such as boxes with for instance supermarket articles. These pallets are typically provided with castors and can travel from the goods vehicle to the storage area of the retailer where they are unloaded and returned in empty state to the goods vehicle. With a view to hygiene the normally wooden pallets have now been replaced by plastic embodiments. The problem with such plastic embodiments is the robustness with respect to the forces acting on the standing bar rails which have the possible result of splitting of the plastic material.

The invention has for its object to provide a pallet wherein the problems outlined above are obviated.

The pallet according to the invention is distinguished in that the recess is provided with a metal coupling member for receiving a pin-like coupling of the support element.

Owing to the use of the metal coupling member the forces are transmitted onto the plastic over a greater surface area whereby splitting no longer occurs.

In one embodiment the coupling member is eye-shaped, the centre line corresponding with that of a through-hole in the load surface.

According to another embodiment the coupling member is U-shaped with the legs pointing outward, this such that the coupling member adapts form-fittingly into a corner recess of the load surface.

In preference the coupling member is provided with a fixing flange which is either fixed to a metal reinforcing profile or directly onto the plastic load surface. On account of the greater dispersal of the points of attachment, for example screws or bolts, the forces can be transmitted more favourably onto the plastic.

In an embodiment the centre line of the coupling member is arranged in staggered position relative to that of the profile in order to keep the rim portion of the plastic pallet sufficiently thick and the recess as close as possible in the corner of the pallet.

It is recommended therein to embody the profile in cross sectionally rectangular form and to arrange it form-fittingly in the pallet.

In an embodiment the load surface is embodied with plastic ribs integrally joined thereto and the head edges of which press against the metal profiles.

Finally, using the attachment flanges of the castors, the metal profiles and the coupling members connected thereto can be clamped fixedly against the underside of the load surface.

The plastic pallet is divided into two mould parts which may be identical in shape but have different widths. This enables the assembly of at least three different widths while retaining an inexpensive mould.

Above mentioned and other features will be further elucidated in the figure description hereinbelow of a number of embodiments. In the drawing:

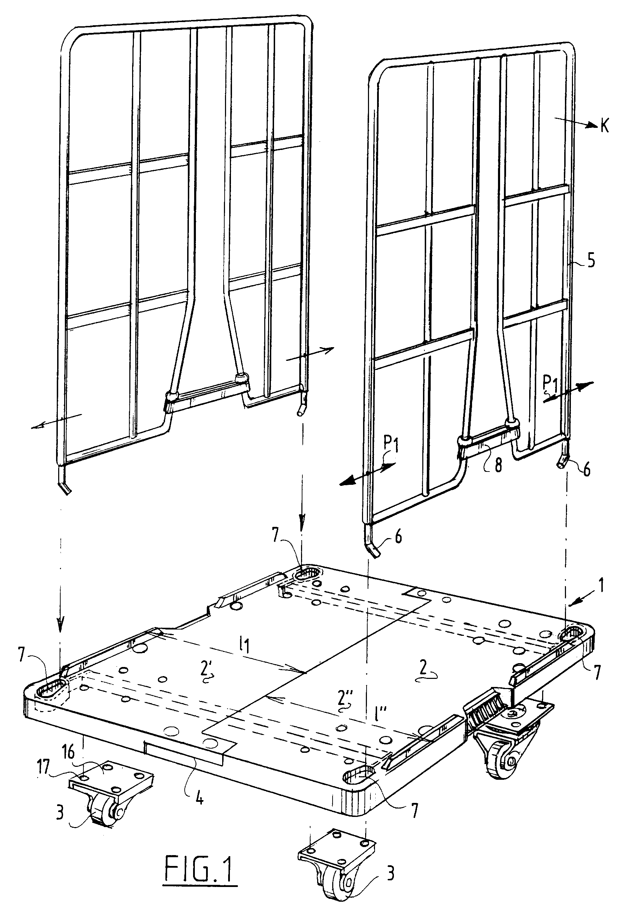

Fig. 1 shows a perspective view of a pallet with support elements for arranging thereon in the form of bar rails and castors for arranging on the underside, shown in exploded view,

fig. 2 is a bottom view of the pallet of fig. 1 according to a first embodiment,

fig. 3 is a bottom view corresponding with fig. 2 of a second embodiment,

fig. 4 is a bottom view corresponding with fig. 2 of the pallet according to a third embodiment.

Designated in the figures with the numeral 1 is the pallet which consists of a load surface 2 and arranged thereunder reinforcing means to be elucidated further hereinbelow. The load surface 2 is embodied on the underside with castors 3 which can be attached by means of random fixing means, for instance bolts and nuts, close to the corners of the quadrangular load surface 2.

It is noted that the load surface 2 is constructed from two plastic mould parts 2', 2'' which are of identical shape and which can be mutually connected by means of an overlap coupling 4. The width "1" of the parts may differ so that in combination the width of the pallet can be varied.

Above the load surface 2 can be placed bar rails 5 which are provided at the bottom with a pin-like coupling 6, in this case two, which can be inserted through a recess 7 in the load surface 2.

The pin-like coupling 6 is given a bent form, whereby, when it is inserted into the recess 7, the bar rail can be biased in the direction of the arrow P1 using the clamp bracket 8 such that the hook-like pins can be clamped fixedly against the mutually facing wall portions of the recess 7. Other means of fixing the bar rail 5 onto the pallet 2 are of course possible within the scope of the invention.

In the known pallets, forces K, which are oriented perpendicularly of the bar rail 5 and which occur for instance due to shifting of loads on the load surface 2, can exert a moment on the plastic of the load surface 2 such that the plastic material in the corners of pallet 2 can split.

In order to prevent this, coupling members are arranged according to the invention which are further elucidated below.

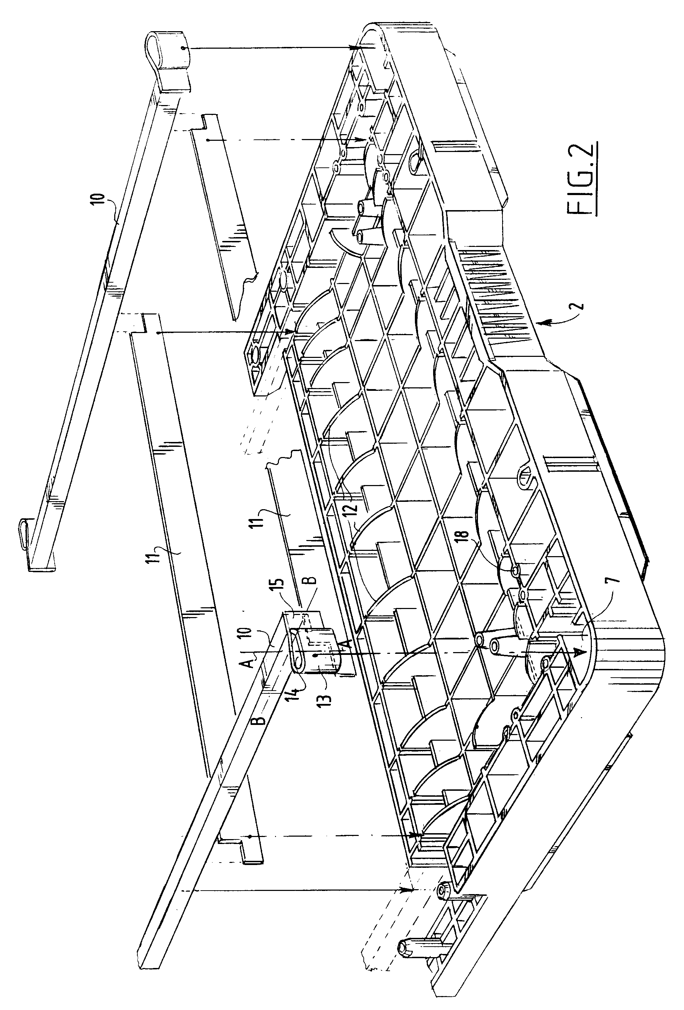

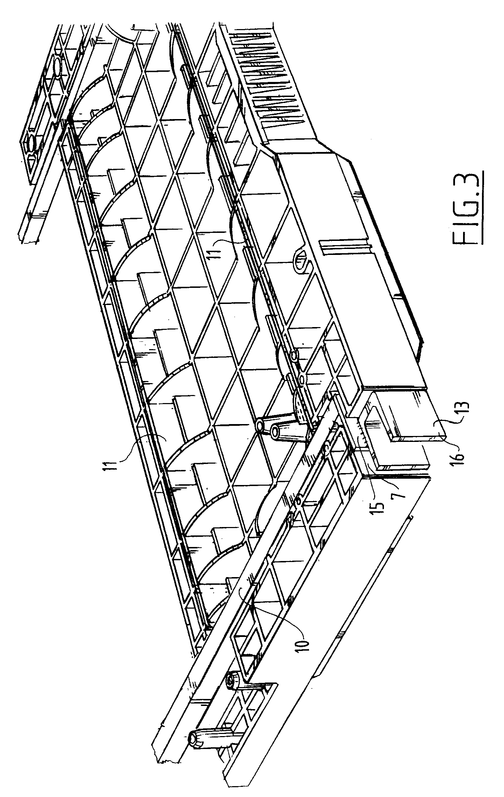

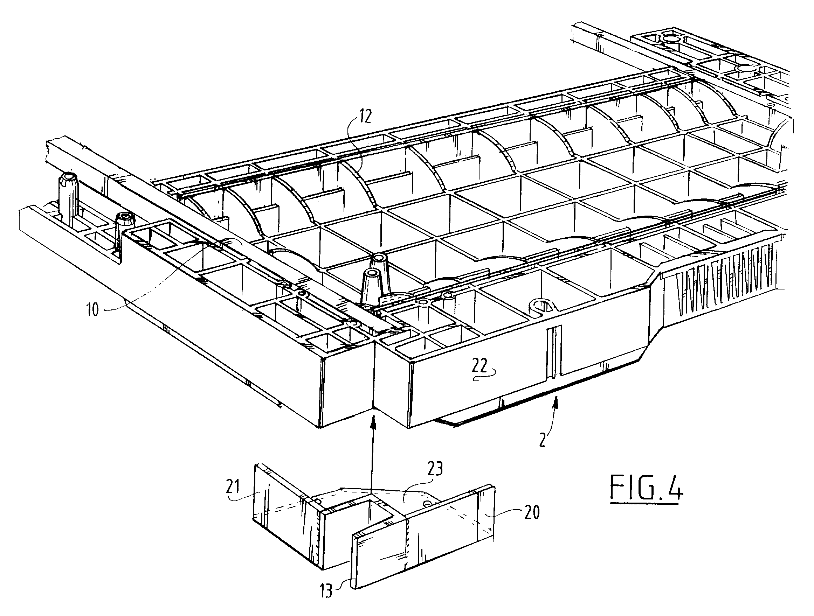

Fig. 2 shows a first embodiment of such a coupling member. The load surface is embodied on the underside with reinforcing profiles of any random suitable metal, whereof the profiles 10 are tubular and have a rectangular or square cross section. Strips 11 are arranged between the profiles 10 such that after embedding of the profiles 10, 11 between the reinforcing ribs 12 on the underside of the load surface 2 a framework is created, see also fig. 3 and 4. The profiles 10, 11 therein lie form-fittingly in the space bounded by the head ends of the separate ribs 12.

Arranged in the corner of the load surface 2 is a recess 7 into which fits an eye-shaped coupling member 13, the opening 14 of which corresponds in shape to the recess 7 and is in register therewith. The eye-shaped coupling member 13 is embodied with a fixing flange 15 which is fixedly welded or fitted in other suitable manner to the head ends of the profile 10.

It is remarked that the fixing of the profiles 10, 11 and the eye-shaped coupling member 13 into the pallet on the underside of the load surface 2 can be carried out by mounting the castors 3. Each castor is embodied with an attachment plate 16 provided with holes 17 for passage of fastening means, for instance bolts or nuts. These can be screwed into screw holes 18 on the underside of the pallet, which screw holes 18 are arranged relative to the connection between profile 10, 11 such that the attachment plate 16 wholly covers the profiles 10, 11 in the corners and clamps them fixedly between the ribs 12 of the pallet.

If now a bar rail 5 is placed on the pallet 1 the pins 6 can be placed into the recesses 7 and into the openings 14 of the eye-shaped coupling member 13. When clamp fixing in the direction of arrow P1 takes place the pins 6 will come into close contact with the inner wall of the eye-shaped coupling member 13. When forces are exerted on the bar rail 5, these forces will be transferred via the pins 6 directly onto the eye-shaped coupling member 13 and onto the profile 10.

The centre line A-A of the eye-shaped coupling member 13 lies in staggered position relative to the centre line B-B of the profile 10. Thus is created the possibility of retaining a broad rim strip of the pallet, which is favourable for the overlap coupling of both plastic parts of the pallet. This provides a significant strengthening of the pallet.

Fig. 3 shows a number of new embodiments, wherein the coupling member 13 is U-shaped and whereof the legs 16 point outward. The recess 7 in the pallet is a recess in the corner portion of the load surface 2 so that the coupling member 13 is accessible from the outside. The pins 6 of the bar rail can here also be inserted and fixedly clamped by means of the clamping system 8 thereof. It is noted that this coupling member 13 likewise has a fixing flange 15 which is again fixedly welded or attached in other suitable manner to the head end of the profile. Fitting of the profile 10 takes place in similar manner through the attachment plate 16 of the castors 3.

Fig. 4 shows an alternative embodiment, wherein fixing of the coupling member 13, here U-shaped, does not take place via a fixing flange 15 to the profile 10 but via an alternative fixing flange 20 and 21 which can be attached to the side 22 of the pallet, and a cover plate 23 which can be fastened to the top side of the load surface 2. Also in this embodiment any pressure or tensile forces that may be exerted on the bar rail 5 are transferred to a greater portion of the plastic pallet owing to the fixing flanges 20, 21, 23. The profiles 10, 11 are fixedly clamped in similar manner in the ribs 12 of the pallet and fitted using the castor attachment plate 16.

The invention is not limited to the above described embodiments.

## Claims

1. Plastic pallet comprising a quadrangular load receiving surface having arranged thereunder reinforcing means including metal profiles, wherein close to the corner of the load receiving surface the pallet has a recess for coupling on one or more support elements, such as a bar rail, standing on the load surface, **characterized in that** the recess is provided with a metal coupling member for receiving a pin-like coupling of the support element.

2. Pallet as claimed in claim 1, **characterized in that** the coupling member is eye-shaped, the passage thereof being in register with the through-hole-like recess in the load surface.

3. Pallet as claimed in claim 1, **characterized in that** the coupling member is a U-shaped metal element opening to the outside which fits into a corner recess of the load surface.

4. Pallet as claimed in claim 2 or 3, **characterized in that** the coupling member is provided with a fixing flange.

5. Pallet as claimed in claim 4, **characterized in that** the flange is fixed to a metal reinforcing profile.

6. Pallet as claimed in claim 5, **characterized in that** the centre line of the coupling member is arranged in staggered position relative to that of the profile.

7. Pallet as claimed in any of the foregoing claims, **characterized in that** ribs formed integrally onto the load surface are arranged as reinforcing means.

8. Pallet as claimed in claim 7, **characterized in that** the metal profiles are received form-fittingly against the head ends of the reinforcing ribs.

9. Pallet as claimed in any of the foregoing claims, **characterized in that** a plate-like wheel carrier is arranged against the underside of the plastic pallet such that the metal profiles are fixedly clamped between the ribs.

10. Pallet as claimed in any of the foregoing claims, **characterized in that** it is assembled from two identically shaped parts.

11. Pallet as claimed in claim 10, **characterized in that** the widths of the parts differ mutually.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 595 210 (GEEST INDUSTRIAL GROUP) <br> * page 6, line 2 - line 26 * <br> * page 7, line 114 - page 8, line 52; figures 1-8 * <br> --- | 1,7,8,9 | B65D19/42 <br> B62B3/00 |
| A | DE-U-9 006 263 (BAUER) <br> * claims 1-5; figures 1-3 * <br> --- | 1-6 | |
| A | EP-A-0 251 439 (REHRIG) <br> * column 3, line 13 - column 4, line 16; figures 1-4 * <br> --- | 1,9-11 | |
| A | US-A-4 077 644 (ROBY) <br> * column 1, line 66 - column 2, line 15 * <br> * column 3, line 12 - line 30; figures 1-6 * <br> ----- | 1,7,9 | |
| | | | **TECHNICAL FIELDS SEARCHED (Int. Cl.5)** <br><br> B65D <br> B62B |

The present search report has been drawn up for all claims

| Place of search | Date of completion of the search | Examiner |
|---|---|---|
| THE HAGUE | 10 MARCH 1992 | VANTOMME M.A. |

EPO FORM 1503 03.82 (P0401)